(19) Europäisches Patentamt
European Patent Office
Office européen des brevets

(11) EP 2 247 050 A2

(12) **EUROPEAN PATENT APPLICATION**

(43) Date of publication:
**03.11.2010 Bulletin 2010/44**

(51) Int Cl.:
***H04L 27/26*** *(2006.01)*

(21) Application number: **09168680.8**

(22) Date of filing: **26.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **30.04.2009 KR 20090038066**

(71) Applicant: **Electronics and Telecommunications Research Institute**
**Daejeon 305-700 (KR)**

(72) Inventors:
- **Park, Gi Yoon**
  **305-330 Daejeon (KR)**
- **Park, Ok-Sun**
  **305-759 Daejeon (KR)**
- **Cho, Dae Soon**
  **305-744 Daejeon (KR)**
- **Park, Hyeong Jun**
  **305-755 Daejeon (KR)**

(74) Representative: **Betten & Resch**
**Patentanwälte**
**Theatinerstrasse 8**
**80333 München (DE)**

(54) **Apparatus and method for decoding orthogonal space-time block codes which are robust against timing errors**

(57) Provided is an apparatus and method for decoding orthogonal space-time block codes (OSTBCs), which are robust against timing errors, The decoding apparatus may include: a cyclic prefix removal unit; an inverse discrete Fourier transform (IDFT) unit; a guard band removal unit which generates a complex matrix; a channel estimation unit to transmit a carrier corresponding to the complex matrix and channel status information associated with transmit and receive antennas; and a decoder to calculate a channel status vector with respect to a complex symbol included in the complex matrix, using the channel status information, and to calculate the inner product of the channel status vector and the complex matrix, to restore the complex symbol.

FIG. 2

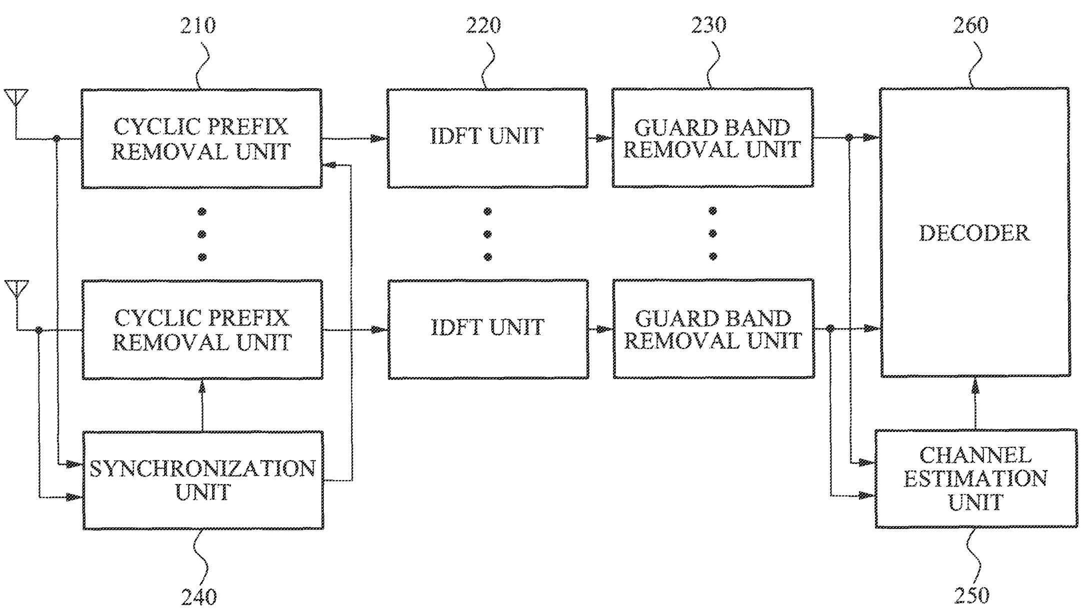


EP 2 247 050 A2

## Description

BACKGROUND

1. Field of the Invention

The present invention relates to a decoding apparatus and method using orthogonal space-time block codes (OSTBCs) robust against timing errors, and more particularly, to a decoding apparatus and method that may prevent a performance deterioration, caused by timing errors, using an orthogonality of OSTBCs.

2. Description of the Related Art

According to a research regarding a decoding apparatus transmitting complex symbols using a plurality of transmit antennas to enhance a communication reliability, in a scheme where symbol vectors transmitted via the transmit antennas, respectively, are orthogonal to each other, the communication reliability may be maximized. The above scheme is referred to as an orthogonal space-time block code (OSTBC) scheme and is adopted for a plurality of mobile communication technology standards such as a 3$^{rd}$ Generation Partnership Project (3GPP) Long Term Evolution (LTE), and the like.

When a channel status is uniformly maintained within a frequency band used for transmission of a code block, the OSTBC scheme may configure an optimal maximum likelihood decoding with a low linear filtering in an aspect of an error rate, However, a channel status may vary upon circumstances such as a multi-path fading phenomenon. In the multi-path fading phenomenon, since distribution paths having a different delay time between a transmission end and a reception end due to a reflector and the like are formed, the channel status may have a frequency selectivity. When the channel status varies, the orthogonality may be broken in the reception end and thereby the effect may decrease.

Also, even in a case where the multi-path fading phenomenon is negligible due to a small delay time difference between the distribution paths, when a timing error occurs, a certain phase difference may occur in a channel status between adjacent carriers whereby the orthogonality may be broken in the reception end and the effect may decrease.

In this instance, an arbitrariness of the frequency selectivity of the channel status is great due to the multi-path fading phenomenon and thus there are some constraints on removing the arbitrariness. However, a change caused by the timing error has a regularity and thus may be different from the aforementioned example.

Accordingly, there is a need for a decoding apparatus and method that may perform decoding using an orthogonality of OSTBCs, so that a timing error may not affect a decoding result

SUMMARY OF THE INVENTION

An aspect of the present invention provides a decoding apparatus and method that may combine channel status information while orthogonal space-time block codes (OSTBCs) are transmitted, using an orthogonality of the OSTBCs, so that a timing error may not affect a decoding result, and thereby may prevent a performance deterioration, caused by the timing error, when receiving the OSTBCs.

According to an aspect of the present invention, there is provided a decoding apparatus using OSTBCs robust against timing errors, the decoding apparatus including: a cyclic prefix removal unit to receive a signal, and to remove a cyclic prefix in the received signal; an inverse discrete Fourier transform (IDFT) unit to apply an IDFR to the signal in which the cyclic prefix is removed; a guard band removal unit to remove, a guard band in the inverse discrete Fourier transformed signal, and to generate a complex matrix; a channel estimation unit to transmit a carrier corresponding to the complex matrix and channel status information associated with transmit and receive antennas; and a decoder to calculate a channel status vector with respect to a complex symbol included in the complex matrix, using the channel status information, and to calculate an inner product between the channel status vector and the complex matrix, to thereby restore the complex symbol.

According to embodiments of the present invention, it is possible to combine channel status information while orthogonal space-time block codes (OSTBCs) are transmitted, using an orthogonality of the OSTBCs, so that a timing error may not affect a decoding result, and thereby may prevent a performance deterioration, caused by the timing error, when receiving the OSTBCs.

BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:

FIG. 1 is a block diagram illustrating an example of an encoding apparatus using orthogonal space-time block codes (OSTBCs) in an orthogonal frequency division multiplexing (OFDM) system according to an embodiment of the present invention;

FIG 2 is a block diagram illustrating an example of a decoding apparatus using OSTBCs robust against timing errors according to an embodiment of the present invention;

FIG. 3 is a diagram illustrating a configuration of an information symbol included in a received signal in a decoding apparatus using OSTBCs robust against timing errors according to an embodiment of the present invention; and

FIG. 4 is a flowchart illustrating a decoding method using OSTBCs robust against timing errors according to an embodiment of the present invention.

DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

FIG. 1 is a block diagram illustrating an example of an encoding apparatus using orthogonal space-time block codes (OSTBCs) in an orthogonal frequency division multiplexing (OFDM) system according to an embodiment of the present invention.

As shown in FIG. 1, the encoding apparatus may include an encoder 110, a plurality of guard band insertion units 120, a plurality of discrete Fourier transform (DFT) units 130, and a plurality of cyclic prefix insertion units 140.

Here, a number of each of the guard band insertions units 120, the DFT units 130, and the cyclic prefix insertion units 140 may be the same as a number of transmit antennas used in the encoding apparatus, and thereby correspond to the transmit antennas, respectively.

The encoder 110 may map an N x K complex matrix C and a symbol block $X_l = [x_0(l) \cdots x_{S-1}(l)]^t$ including S complex symbols using an OSTBC technology. Each row of the complex matrix C and a transmit antenna connected to the cyclic prefix insertion unit 140 may have a one-to-one correspondence relationship. An adjacent column of the complex matrix C may map an adjacent carrier.

Here, when a conjugate transpose and a transpose are expressed by $x^*$ and $x^1$ with respect to a complex vector x, and a block index $l$ is omitted, each element of the complex matrix C may be expressed by a linear combination of complex symbols $x_0 .....x_{S-1}$ and complex conjugates. Specifically, complex matrices $A_k$ and $B_k$ satisfying the following Equation 1 may exist:

[Equation 1]

$$\mathbf{c}_k = \mathbf{A}_k \cdot \mathbf{x} + \mathbf{B}_k \cdot \mathbf{x}^{t*},\ 0 \leq k < K,$$

where $c_k$ denotes a $k^{th}$ column vector of the complex matrix C, and k denotes an integer greater than or equal to zero and less than K.

Also, row vectors of the complex matrix C may be orthogonal to each other and may have a norm. Specifically, the row vectors may satisfy the following Equation 2:

[Equation 2]

$$\mathbf{C} \cdot \mathbf{C}^* = \|x\|^2 \cdot \mathbf{I}_N.$$

Also, according to the above Equation 1 and Equation 2, the complex matrix C may satisfy the following Equation 3 and Equation 4:

[Equation 3]

$$\sum_{0 \le k < K} (\mathbf{A}_k^* \mathbf{G} \mathbf{B}_k) + (\mathbf{A}_k^* \mathbf{G} \mathbf{B}_k)^t = \mathbf{O}_S$$

and

[Equation 4]

$$\sum_{0 \le k < K} (\mathbf{A}_k^* \mathbf{G} \mathbf{A}_k) + (\mathbf{B}_k^* \mathbf{G} \mathbf{B}_k)^t = \mathrm{Tr}(\mathbf{G}) \cdot \mathbf{I}_S$$

Here, G may be an M x N complex matrix, and Tr(G) denotes a sum of diagonal elements of the complex matrix G.

The guard band insertion unit 120 may insert a guard band into the complex matrix.

The DFT unit 130 may apply a DFT to the complex matrix with the inserted guard band.

The cyclic prefix unit 140 may insert a cyclic prefix into the discrete Fourier transformed complex matrix to generate a transmission signal, and may transmit the transmission signal via the transmit antenna.

FIG. 2 is a block diagram illustrating an example of a decoding apparatus using OSTBCs robust against timing errors according to an embodiment of the present invention.

The decoding apparatus denotes an apparatus that may decode a transmission signal transmitted from an encoding apparatus of an OFDM system using the OSTBCs. Referring to FIG 2, the decoding apparatus may include a plurality of cyclic prefix removal units 210, a plurality of inverse DFT (IDPT) units 220, a plurality of guard band removal units 230, a synchronization unit 240, a channel estimation unit 250, and a decoder 260.

Here, a number of each of the cyclic prefix removal units 210, the IDFT units 220, and the guard band units 230 may be the same as a number of receive antennas used in the decoding apparatus, and thus may correspond to the receive antennas, respectively.

The cyclic prefix removal unit 210 may receive the transmission signal via the receive antenna, and remove a cyclic prefix in the transmission signal.

The IDFT unit 220 may apply an IDFT to the transmission signal in which the cyclic prefix is removed.

The guard band removal unit 230 may remove a guard band in the inverse discrete Fourier transformed transmission signal to generate a complex matrix R.

The synchronization unit 240 may extract a DFT window in an information symbol included in the transmission signal, and transmit the extracted DFT window to the cyclic prefix removal unit 210. Here, the information symbol may be an OFDM symbol.

Specifically, the synchronization unit 240 may extract the DFT window in the information symbol using a reference signal.

As shown in FIG 3, an information symbol 310 included in a transmission signal may include a DFT window 320 and a cyclic prefix interval CP 330.

Here, when a start point 321 of the DFT window 320 is located behind an end point 331 of the cyclic prefix interval CP 330, interference may occur in a subsequent information symbol. When the start point 321 of the DFT window 320 is located ahead of the end point 331 of the cyclic prefix interval CP 330, a phase ramp of a radio channel status may occur in a frequency domain.

The channel estimation unit 250 may provide the decoder 260 with channel status information $H_k$ associated with transmit and receive antennas, and a carrier corresponding to the complex matrix R,

The channel status information $H_k$ may correspond to information of a matrix structure. Here, k denotes an index of a carrier in a block, and rows and columns of the channel status information $H_k$ may correspond to transmit antennas and receive antennas, respectively.

Also, the channel status information $H_k$ may correspond to channel status information obtained while the cyclic prefix removal unit 210 receives the transmission signal.

The decoder 260 may calculate a channel status vector with respect to a complex symbol included in the complex matrix R, using the channel status information $H_k$, and calculate an inner product between the channel status vector and the complex matrix R to thereby restore the complex symbol that is input into the encoder 110, and the complex matrix C that is a matrix of the complex symbol.

A $k^{th}$ column vector $r_k$ of the complex matrix R transmitted from the guard band 230 to the decoder 260 may satisfy the following Equation 5:

[Equation 5]

$$\begin{aligned} \mathbf{r}_k &= \mathbf{H}_k \mathbf{c}_k + \mathbf{w}_k \\ &= \mathbf{H}_k(\mathbf{A}_k \mathbf{x} + \mathbf{B}_k \mathbf{x}^{t*}) + \mathbf{w}_{t,} \end{aligned}$$

where $c_k$ denotes a $k^{th}$ column of the complex matrix C, and $w_k$ denotes white noise according to a normal distribution. Specifically, the decoder 260 may estimate $c_k$ using $r_k$ and $H_k$.

The decoder 260 may generate channel status information matrices with respect to the complex symbol based on the channel status information, Specifically, the decoder 260 may apply $H_k$ to the following Equation 6, and generate channel status information matrices $\widetilde{\mathbf{H}}_k^{(A)}$ and $\widetilde{\mathbf{H}}_k^{(B)}$ including channel status information associated with complex symbol vectors x and $x^{t*}$.

[Equation 6]

$$\widetilde{\mathbf{H}}_k^{(A)} = \mathbf{H}_k \mathbf{A}_k, \quad \widetilde{\mathbf{H}}_k^{(B)} = \mathbf{H}_k \mathbf{B}_k.$$

Here, k denotes a subcarrier index of a block, and the complex vector $r_k$ may satisfy the following Equation 7, derived from the above Equation 5 and Equation 6:

[Equation 7]

$$\mathbf{r}_k = \widetilde{\mathbf{H}}_k^{(A)} \mathbf{x} + \widetilde{\mathbf{H}}_k^{(B)} \mathbf{x}^{t*} + \mathbf{w}_k.$$

The decoder 260 may calculate an inner product between the channel status information matrices $\widetilde{\mathbf{H}}_k^{(A)}$ and $\widetilde{\mathbf{H}}_k^{(B)}$, and the complex matrix R according to the following Equation 8, and thereby restore the complex symbol. Here, $\|H_0\|_F$, denotes a Frobeniuos norm with respect to $H_0$, and is defined as a sum of square values of absolute values of elements of $H_0$. Equation 8 may be given by:

[Equation 8]

$$\hat{\mathbf{x}} = \frac{1}{\|\mathbf{H}_0\|_F} \sum_{0 \le k < K} \widetilde{\mathbf{H}}_k^{(A)*} \cdot \mathbf{r}_k + (\mathbf{r}_k^* \cdot \widetilde{\mathbf{H}}_k^{(B)})^t$$

While calculating the channel status information matrices $\widetilde{\mathbf{H}}_k^{(A)}$ and $\widetilde{\mathbf{H}}_k^{(B)}$, the decoder 260 may apply $H_k$ corresponding to each subcarrier index, instead of using a representative value with the assumption that $H_k$ is a constant with respect to k.

An estimate $\hat{X}$ with respect to the complex symbol vector may be expressed by the following Equation 9, using the above Equation 6, Equation 7, and Equation 8. Here, due to a characteristic of OSTBCs described in the above Equation 3 and Equation 4, where, only $H_k^*H_k$ are uniform regardless of a fact that a value of $H_k$ varies with respect to k, an interference component may be offset and only a transmitted symbol vector and a white noise component may remain.

In particular, when a relationship of $\mathbf{H}_k = \psi(k) \cdot \mathbf{H}_0$ where $\upsilon(k)^*\upsilon(k) = 1$ is established due to a timing error, the condition that $\mathbf{H}_k^*\mathbf{H}_k$ should be uniform is satisfied. Therefore, it can be known that a decoding method proposed in the present invention is robust against the timing error. Also, when a unitary matrix V satisfying $H_k = V H_0$ exists, the interference component may be offset.

[Equation 9]

$$\hat{\mathbf{x}} = \frac{1}{\|\mathbf{H}_0\|_F} \sum_{0 \le k < K} \begin{pmatrix} \{\mathbf{A}_k^*\mathbf{H}_k^*\mathbf{H}_k\mathbf{A}_k + (\mathbf{B}_k^*\mathbf{H}_k^*\mathbf{H}_k\mathbf{B}_k)^t\}\mathbf{x} \\ +\{\mathbf{A}_k^*\mathbf{H}_k^*\mathbf{H}_k\mathbf{B}_k + (\mathbf{A}_k^*\mathbf{H}_k^*\mathbf{H}_k\mathbf{B}_k)^t\}\mathbf{x}^{t*} \\ +\mathbf{A}_k^*\mathbf{H}_k^*\mathbf{w}_k + \mathbf{B}_k^*\mathbf{H}_k^*\mathbf{w}_k^{t*} \end{pmatrix}$$
$$\xrightarrow{\text{const. } \mathbf{H}_k^*\mathbf{H}_k} \mathbf{x} + \frac{1}{\|\mathbf{H}_0\|_F} \sum_{0 \le k < K} \mathbf{A}_k^*\mathbf{H}_k^*\mathbf{w}_k + \mathbf{B}_k^*\mathbf{H}_k^*\mathbf{w}_k^{t*} \quad .$$

For example, the decoder 260 may use an Alamouti code to decode a 2 x 2 complex matrix, as shown in the following Equation 10. Here, $h_n^{(k)}$ denotes an $n^{th}$ column vector constituting the complex matrix $H_k$.

[Equation 10]

$$\mathbf{C} = \begin{bmatrix} x_0 & -x_1^* \\ x_1 & x_0^* \end{bmatrix}$$
$$\Longrightarrow \begin{bmatrix} \mathbf{r}_0 \\ \mathbf{r}_1 \end{bmatrix} = \begin{bmatrix} \mathbf{H}_0 & \mathbf{O} \\ \mathbf{O} & \mathbf{H}_1 \end{bmatrix} \left( \begin{bmatrix} 1 & 0 \\ 0 & 1 \\ 0 & 0 \\ 0 & 0 \end{bmatrix} \begin{bmatrix} x_0 \\ x_1 \end{bmatrix} + \begin{bmatrix} 0 & 0 \\ 0 & 0 \\ 0 & -1 \\ 1 & 0 \end{bmatrix} \begin{bmatrix} x_0^* \\ x_1^* \end{bmatrix} \right) + \begin{bmatrix} \mathbf{w}_0 \\ \mathbf{w}_1 \end{bmatrix}$$
$$= \begin{bmatrix} \mathbf{h}_0^{(0)} & \mathbf{h}_1^{(0)} \\ \mathbf{0} & \mathbf{0} \end{bmatrix} \begin{bmatrix} x_0 \\ x_1 \end{bmatrix} + \begin{bmatrix} \mathbf{0} & \mathbf{0} \\ \mathbf{h}_1^{(1)} & -\mathbf{h}_0^{(1)} \end{bmatrix} \begin{bmatrix} x_0^* \\ x_1^* \end{bmatrix} + \begin{bmatrix} \mathbf{w}_0 \\ \mathbf{w}_1 \end{bmatrix}$$

$$\therefore \begin{cases} \widehat{x}_0 = \dfrac{\mathbf{h}_0^{(0)*} \cdot \mathbf{r}_0 + \mathbf{r}_1^* \cdot \mathbf{h}_1^{(1)}}{\left\|\mathbf{h}_0^{(0)}\right\|^2 + \left\|\mathbf{h}_1^{(1)}\right\|^2} \\ \widehat{x}_1 = \dfrac{\mathbf{h}_1^{(0)*} \cdot \mathbf{r}_0 - \mathbf{r}_1^* \cdot \mathbf{h}_0^{(1)}}{\left\|\mathbf{h}_1^{(0)}\right\|^2 + \left\|\mathbf{h}_0^{(1)}\right\|^2} \end{cases}.$$

Also, the decoder 260 may decode information, transmitted from the encoding apparatus using four transmit antennas, as given by the following Equation 11;

[Equation 11]

$$\mathbf{C} = \begin{bmatrix} x_0 & x_1 & x_2/\sqrt{2} & x_2/\sqrt{2} \\ -x_1^* & x_0^* & x_2/\sqrt{2} & -x_2/\sqrt{2} \\ x_2^*/\sqrt{2} & x_2^*/\sqrt{2} & (-x_0 - x_0^* + x_1 - x_1^*)/2 & (-x_1 - x_1^* + x_0 - x_0^*)/2 \\ x_2^*/\sqrt{2} & -x_2^*/\sqrt{2} & (x_1 + x_1^* - x_0 - x_0^*)/2 & (-x_0 - x_0^* - x_1 + x_1^*)/2 \end{bmatrix}$$

$$\Longrightarrow \begin{bmatrix} \mathbf{r}_0 \\ \mathbf{r}_1 \\ \mathbf{r}_2 \\ \mathbf{r}_3 \end{bmatrix} = \begin{bmatrix} \mathbf{H}_0 & \mathbf{O} & \mathbf{O} & \mathbf{O} \\ \mathbf{O} & \mathbf{H}_1 & \mathbf{O} & \mathbf{O} \\ \mathbf{O} & \mathbf{O} & \mathbf{H}_2 & \mathbf{O} \\ \mathbf{O} & \mathbf{O} & \mathbf{O} & \mathbf{H}_3 \end{bmatrix} \left( \begin{bmatrix} 1 & 0 & 0 \\ 0 & 0 & 0 \\ 0 & 0 & 0 \\ 0 & 0 & 0 \\ 0 & 1 & 0 \\ 0 & 0 & 0 \\ 0 & 0 & 0 \\ 0 & 0 & 0 \\ 0 & 0 & \frac{1}{\sqrt{2}} \\ 0 & 0 & \frac{1}{\sqrt{2}} \\ -\frac{1}{2} & \frac{1}{2} & 0 \\ -\frac{1}{2} & \frac{1}{2} & 0 \\ 0 & 0 & \frac{1}{\sqrt{2}} \\ 0 & 0 & -\frac{1}{\sqrt{2}} \\ \frac{1}{2} & -\frac{1}{2} & 0 \\ -\frac{1}{2} & -\frac{1}{2} & 0 \end{bmatrix} \begin{bmatrix} x_0 \\ x_1 \\ x_2 \end{bmatrix} + \begin{bmatrix} 0 & 0 & 0 \\ 0 & -1 & 0 \\ 0 & 0 & \frac{1}{\sqrt{2}} \\ 0 & 0 & \frac{1}{\sqrt{2}} \\ 0 & 0 & 0 \\ 1 & 0 & 0 \\ 0 & 0 & \frac{1}{\sqrt{2}} \\ 0 & 0 & -\frac{1}{\sqrt{2}} \\ 0 & 0 & 0 \\ 0 & 0 & 0 \\ -\frac{1}{2} & -\frac{1}{2} & 0 \\ -\frac{1}{2} & \frac{1}{2} & 0 \\ 0 & 0 & 0 \\ 0 & 0 & 0 \\ -\frac{1}{2} & -\frac{1}{2} & 0 \\ -\frac{1}{2} & \frac{1}{2} & 0 \end{bmatrix} \begin{bmatrix} x_0^* \\ x_1^* \\ x_2^* \end{bmatrix} \right) + \begin{bmatrix} \mathbf{w}_0 \\ \mathbf{w}_1 \\ \mathbf{w}_2 \end{bmatrix}$$

$$= \begin{bmatrix} \mathbf{h}_0^{(0)} & \mathbf{0} & \mathbf{0} \\ \mathbf{0} & \mathbf{h}_0^{(1)} & \mathbf{0} \\ (-\mathbf{h}_2^{(2)} + \mathbf{h}_3^{(2)})/2 & (\mathbf{h}_2^{(2)} + \mathbf{h}_3^{(2)})/2 & (\mathbf{h}_0^{(2)} + \mathbf{h}_1^{(2)})/\sqrt{2} \\ (\mathbf{h}_2^{(3)} - \mathbf{h}_3^{(3)})/2 & (-\mathbf{h}_2^{(3)} - \mathbf{h}_3^{(3)})/2 & (\mathbf{h}_0^{(3)} - \mathbf{h}_1^{(3)})/\sqrt{2} \end{bmatrix} \begin{bmatrix} x_0 \\ x_1 \\ x_2 \end{bmatrix}$$

$$+ \begin{bmatrix} \mathbf{0} & -\mathbf{h}_1^{(0)} & (\mathbf{h}_2^{(0)} + \mathbf{h}_3^{(0)})/\sqrt{2} \\ \mathbf{h}_1^{(1)} & \mathbf{0} & (\mathbf{h}_2^{(1)} - \mathbf{h}_3^{(1)})/\sqrt{2} \\ (-\mathbf{h}_2^{(2)} - \mathbf{h}_3^{(2)})/2 & (-\mathbf{h}_2^{(2)} + \mathbf{h}_3^{(2)})/2 & \mathbf{0} \\ (-\mathbf{h}_2^{(3)} - \mathbf{h}_3^{(3)})/2 & (-\mathbf{h}_2^{(3)} + \mathbf{h}_3^{(3)})/2 & \mathbf{0} \end{bmatrix} \begin{bmatrix} x_0^* \\ x_1^* \\ x_2^* \end{bmatrix} + \begin{bmatrix} \mathbf{w}_0 \\ \mathbf{w}_1 \\ \mathbf{w}_2 \end{bmatrix}$$

$$\therefore \begin{cases} \hat{x}_0 = \dfrac{1}{\sum_{0\le n<4}\left\|\mathbf{h}_n^{(0)}\right\|^2} \cdot \begin{Bmatrix} \mathbf{h}_0^{(0)*}\cdot\mathbf{r}_0 + (-\mathbf{h}_2^{(2)*}+\mathbf{h}_3^{(2)*})/2\cdot\mathbf{r}_2 + (\mathbf{h}_2^{(3)*}-\mathbf{h}_3^{(3)*})/2\cdot\mathbf{r}_3 \\ +\mathbf{r}_1^*\cdot\mathbf{h}_1^{(1)} + \mathbf{r}_2^*\cdot(-\mathbf{h}_2^{(2)}-\mathbf{h}_3^{(2)})/2 + \mathbf{r}_3^*\cdot(-\mathbf{h}_2^{(3)}-\mathbf{h}_3^{(3)})/2 \end{Bmatrix} \\ \hat{x}_1 = \dfrac{1}{\sum_{0\le n<4}\left\|\mathbf{h}_n^{(0)}\right\|^2} \cdot \begin{Bmatrix} \mathbf{h}_0^{(1)*}\cdot\mathbf{r}_1 + (\mathbf{h}_2^{(2)*}-\mathbf{h}_3^{(2)*})/2\cdot\mathbf{r}_2 + (-\mathbf{h}_2^{(3)*}-\mathbf{h}_3^{(3)*})/2\cdot\mathbf{r}_3 \\ -\mathbf{r}_0^*\cdot\mathbf{h}_1^{(0)} + \mathbf{r}_2^*\cdot(-\mathbf{h}_2^{(2)}+\mathbf{h}_3^{(2)})/2 + \mathbf{r}_3^*\cdot(-\mathbf{h}_2^{(3)}+\mathbf{h}_3^{(3)})/2 \end{Bmatrix} \\ \hat{x}_2 = \dfrac{1}{\sum_{0\le n<4}\left\|\mathbf{h}_n^{(0)}\right\|^2} \cdot \begin{Bmatrix} (\mathbf{h}_2^{(2)*}+\mathbf{h}_3^{(2)*})/\sqrt{2}\cdot\mathbf{r}_2 + (\mathbf{h}_2^{(3)*}-\mathbf{h}_3^{(3)*})/\sqrt{2}\cdot\mathbf{r}_3 \\ +\mathbf{r}_0^*\cdot(\mathbf{h}_2^{(0)}+\mathbf{h}_3^{(0)})/\sqrt{2} + \mathbf{r}_1^*\cdot(\mathbf{h}_2^{(1)}-\mathbf{h}_3^{(1)})/\sqrt{2} \end{Bmatrix} \end{cases}$$

FIG. 4 is a flowchart illustrating a decoding method using OSTBCs robust against timing errors according to an embodiment of the present invention. The decoding method may be performed by components constituting the decoding apparatus of FIG 2.

In operation S410, the cyclic prefix removal unit 210 may remove a cyclic prefix in a signal received via a receive antenna.

In operation S420, the IDFT unit 220 may apply an IDFT to the signal in which the cyclic prefix is removed.

In operation S430, the guard band removal unit 420 may remove a guard band in the inverse discrete Fourier transformed signal to generate a complex matrix R.

In operation S440, the decoder 260 may generate a channel status vector offsetting an interference component. Specifically, the decoder 260 may receive, from the channel estimation unit 250, channel status information associated with a carrier corresponding to the complex matrix and transmit and receive antennas, and multiply corresponding channel status information and a matrix designating an OSTBC, for example, $A_k$ and $B_k$ of the above Equation 4, based on a carrier unit, and thereby may generate the channel status vector offsetting the interference component.

As described above, according to an embodiment of the present invention, there may be provided a decoding apparatus and method that may combine channel status information while OSTBCs are transmitted, using an orthogonality of the OSTBCs, so that a timing error may not affect a decoding result, and thereby may prevent a performance deterioration, caused by the timing error, when receiving the OSTBCs.

Although a few exemplary embodiments of the present invention have been shown and described, the present invention is not limited to the described exemplary embodiments. Instead, it would be appreciated by those skilled in the art that changes may be made to these exemplary embodiments without departing from the principles of the invention, the scope of which is defined by the claims and their equivalents.

## Claims

1. A decoding apparatus using orthogonal space-time block codes robust against timing errors, the decoding apparatus comprising:

    a cyclic prefix removal unit to receive a signal, and to remove a cyclic prefix in the received signal;
    an inverse discrete Fourier transform (IDFT) unit to apply an IDFT to the signal in which the cyclic prefix is removed;
    a guard band removal unit to remove a guard band in the inverse discrete Fourier transformed signal, and to generate a complex matrix;
    a channel estimation unit to transmit a carrier corresponding to the complex matrix and channel status information associated with transmit and receive antennas; and
    a decoder to calculate a channel status vector with respect to a complex symbol included in the complex matrix, using the channel status information, and to calculate an inner product between the channel status vector and the complex matrix, to thereby restore the complex symbol.

2. The decoding apparatus of claim 1, wherein the channel status information is associated with a channel status while the cyclic prefix removal unit receives the signal.

**3.** The decoding apparatus of claim 1, wherein the channel status information is in a form of a matrix that includes a row corresponding to the receive antenna and a column corresponding to the transmit antenna.

**4.** The decoding apparatus of claim 3, wherein the decoder generates channel status information matrices with respect to complex symbols based on the channel status information, and combines the channel status information matrices to constitute, the channel status vector that is a single information matrix.

**5.** A decoding method using orthogonal space-time block codes robust against timing errors, the method comprising:

generating a complex matrix based on a received signal;
transmitting a carrier corresponding to the complex matrix and channel status information associated with transmit and receive antennas;
calculating a channel status vector with respect to a complex symbol included in the complex matrix, using the channel status information; and
calculating an inner product between the channel status vector and the complex matrix to restore the complex symbol.

**6.** The method of claim 5, wherein the calculating of the channel status vector comprises:

multiplying the channel status information and a complex number of the complex symbol to generate channel status information matrices with respect to the complex symbol; and
combining the channel status information matrices to generate the channel status vector that is a single information matrix.

**7.** The method of claim 5, wherein the generating of the complex matrix comprises:

removing a cyclic prefix in the received signal;
applying an IDFT to the signal in which the cyclic prefix is removed; and
removing a guard band in the inverse discrete Fourier transformed signal to generate the complex matrix.

FIG. 1

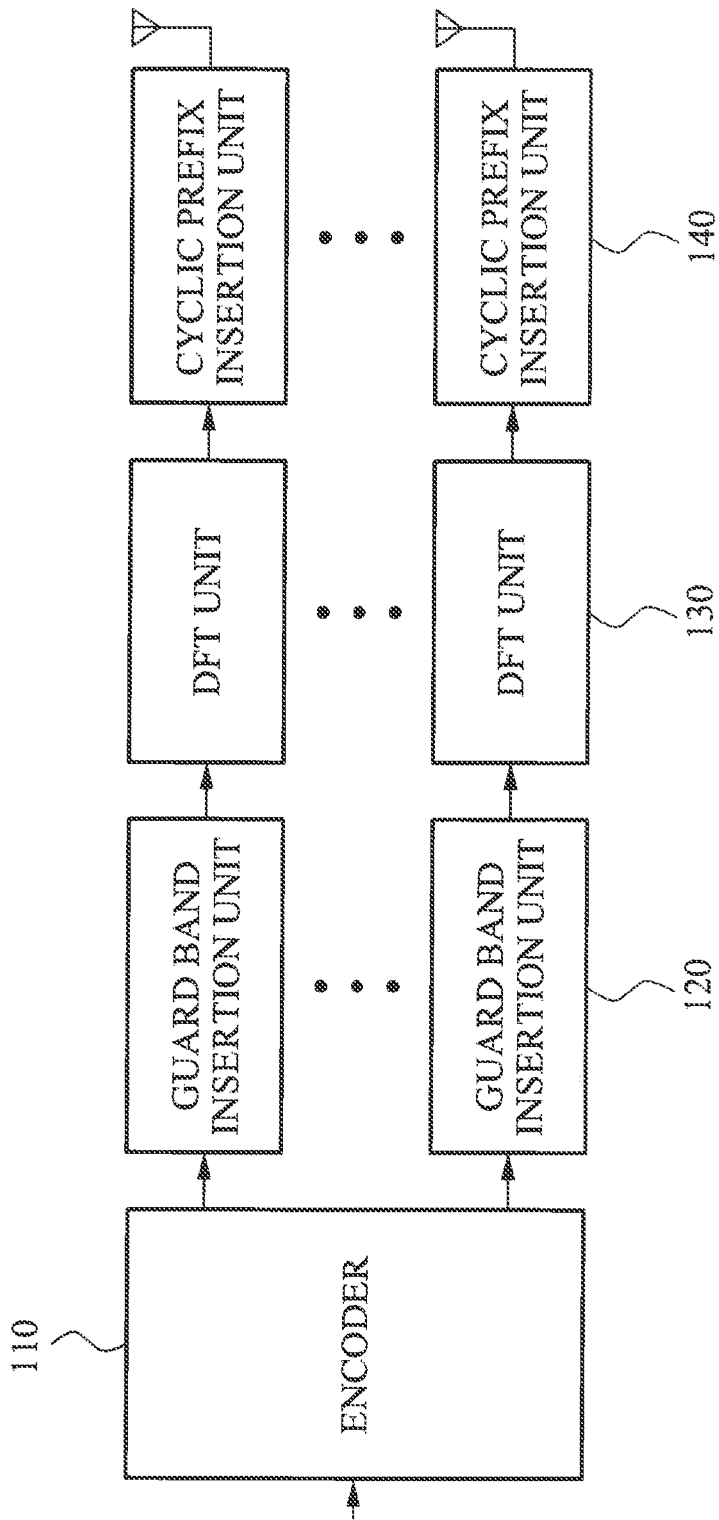
110
ENCODER
GUARD BAND INSERTION UNIT
GUARD BAND INSERTION UNIT
120
DFT UNIT
DFT UNIT
130
CYCLIC PREFIX INSERTION UNIT
CYCLIC PREFIX INSERTION UNIT
140

FIG. 2

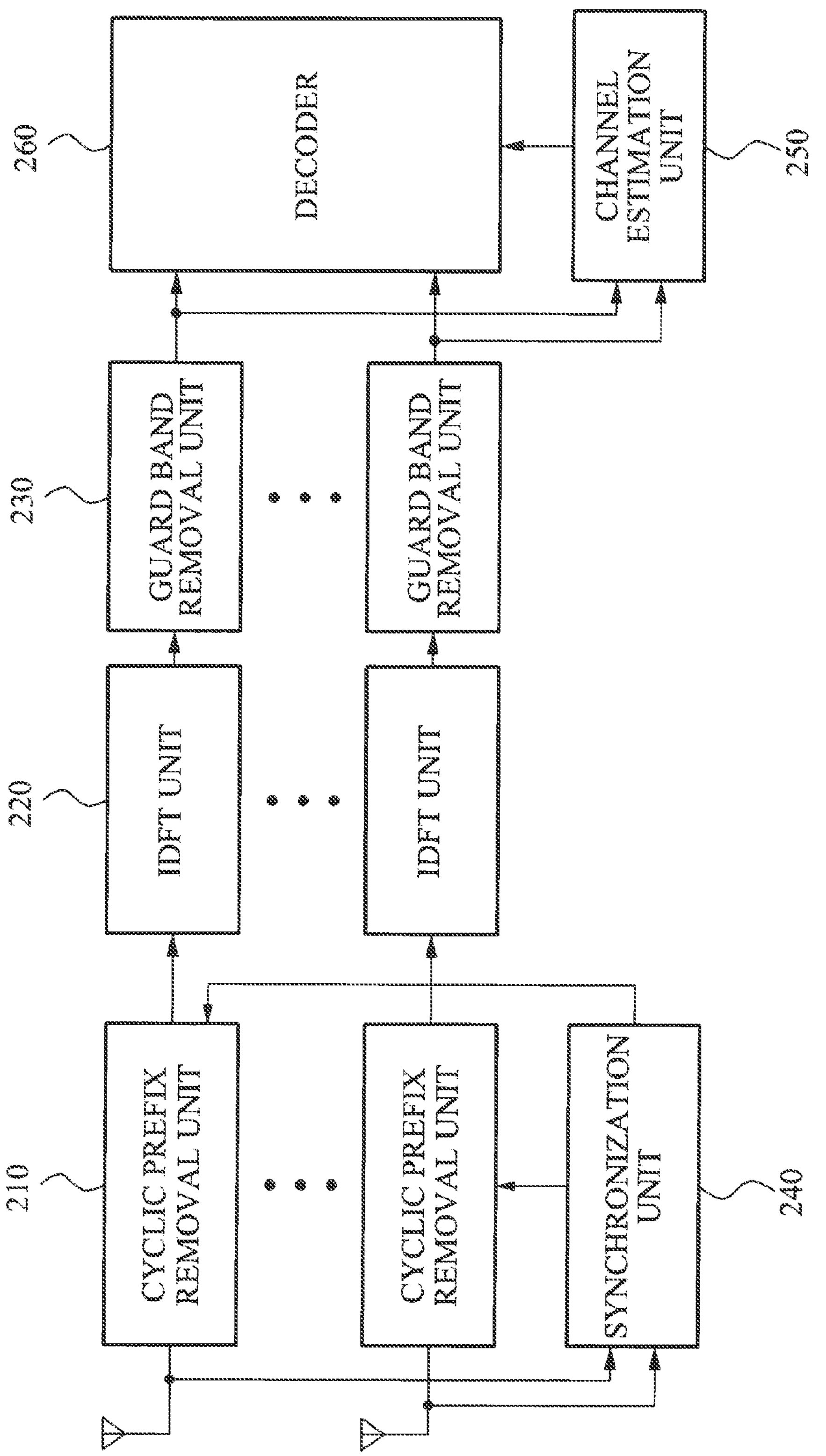

210
CYCLIC PREFIX REMOVAL UNIT
CYCLIC PREFIX REMOVAL UNIT
240
SYNCHRONIZATION UNIT
220
IDFT UNIT
IDFT UNIT
230
GUARD BAND REMOVAL UNIT
GUARD BAND REMOVAL UNIT
260
DECODER
250
CHANNEL ESTIMATION UNIT

FIG. 3

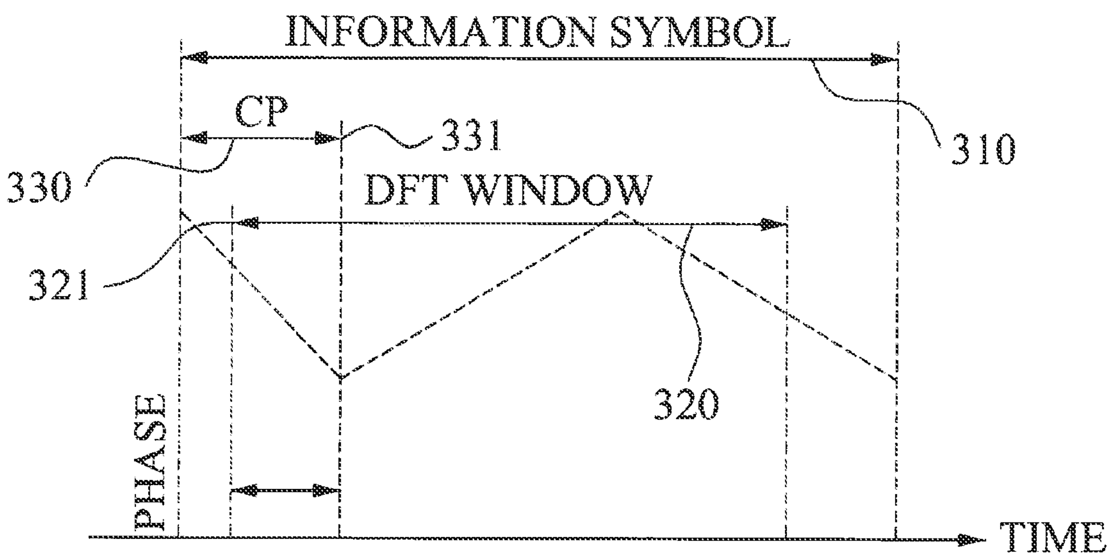
INFORMATION SYMBOL
CP
331
310
330
DFT WINDOW
321
320
PHASE
TIME

FIG. 4

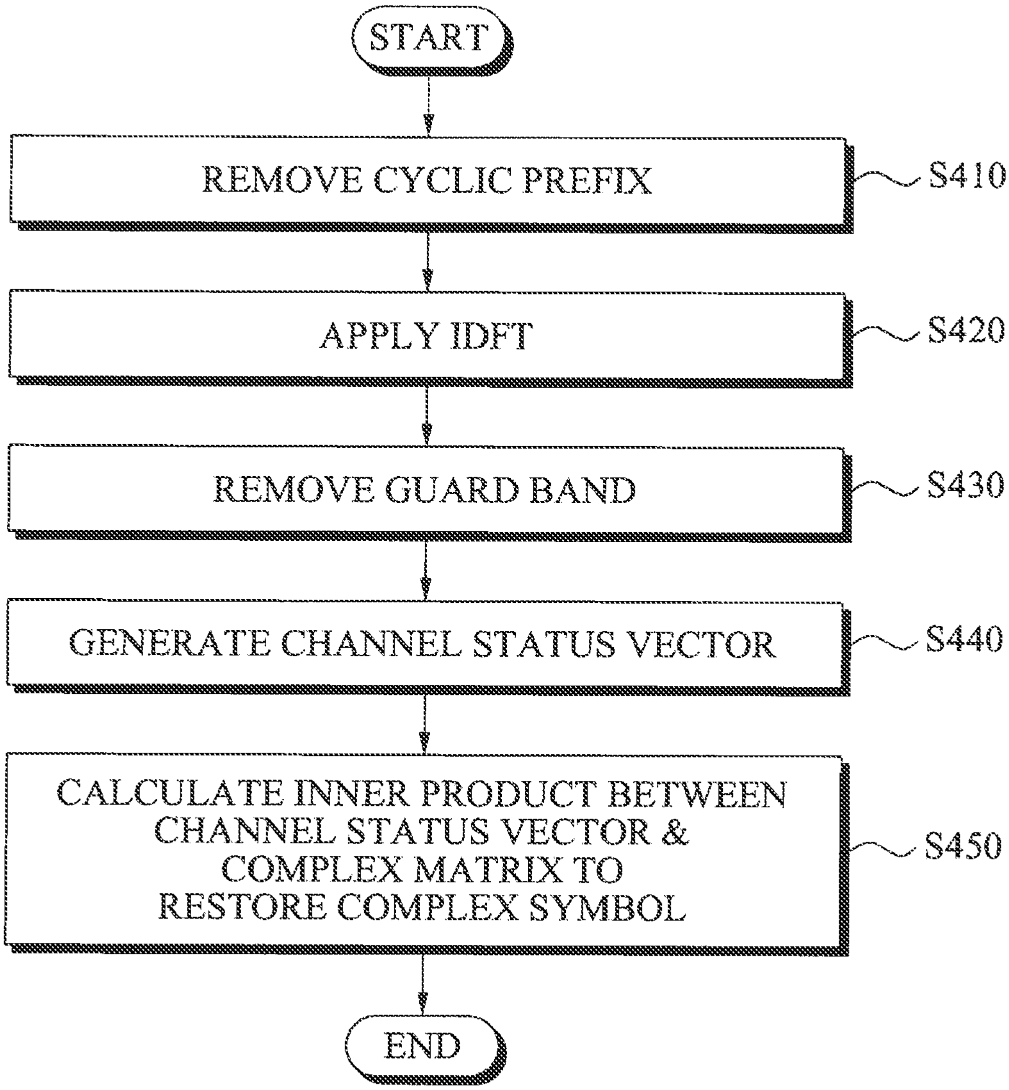
START
REMOVE CYCLIC PREFIX
S410
APPLY IDFT
S420
REMOVE GUARD BAND
S430
GENERATE CHANNEL STATUS VECTOR
S440
CALCULATE INNER PRODUCT BETWEEN CHANNEL STATUS VECTOR & COMPLEX MATRIX TO RESTORE COMPLEX SYMBOL
S450
END